# EUROPEAN PATENT APPLICATION

(11) **EP 4 848 465 A1**
(43) Date of publication of application: **02.12.2026**
(21) Application number: 24941059.8
(22) Date of filing: 29.05.2024
(51) Int. Cl.: H01M 50/593

(54) **BATTERY CELL, BATTERY, AND ELECTRIC DEVICE**

(71) Applicant: Contemporary Amperex Technology Co., Limited, Ningde, Fujian 352100 (CN)
(72) Inventor: MA, Ruoyan, Ningde, Fujian 352100 (CN); GUO, Zhijun, Ningde, Fujian 352100 (CN); WU, Guangjin, Ningde, Fujian 352100 (CN); XIE, Chengbin, Ningde, Fujian 352100 (CN); SHI, Shengyun, Ningde, Fujian 352100 (CN)
(74) Representative: Ziebig Hengelhaupt Intellectual Property Attorneys Patentanwaltskanzlei PartGmbB
(86) International application number: PCT/CN2024/096143
(87) International publication number: WO 2025/245748

(57) **Abstract**

A battery cell (20), a battery (100), and an electric device. The battery cell (20) comprises a casing (1), an electrode terminal (2), an electrode assembly (3), and an insulating member (4). The electrode terminal (2) is arranged on a wall portion (11) of the casing (1). The electrode assembly (3) is accommodated in the casing (1). A first tab (32) of the electrode assembly (3) is electrically connected to the electrode terminal (2). A first insulating portion (41) of the insulating member (4) surrounds the outer side of the first tab (32). A second insulating portion (42) is connected to the first insulating portion (41) and located between the wall portion (11) and the first tab (32). In the structure, the first insulating portion (41) of the insulating member (4) surrounds the outer side of the first tab (32), and the second insulating portion (42) is located between the wall portion (11) and the first tab (32), such that the insulating member (4) can insulate and isolate the first tab (32) from the casing (1), thereby reducing an insulating treatment process such as applying an insulating adhesive to the first tab (32), and thus improving the production efficiency of the battery cell (20).

## Description

### TECHNICAL FIELD

The present application relates to the technical field of batteries, and in particular, to a battery cell, a battery, and an electric device.

### BACKGROUND

Batteries have the advantages of high specific energy and high power density, and are widely used in electronic devices and transportation vehicles, such as mobile phones, laptop computers, electric bicycles, electric cars, electric airplanes, electric ships, and electric tools.

With the continuous expansion of the application range of batteries, how to improve the production efficiency of batteries has long been a focus of those skilled in the art.

### SUMMARY

In view of the above problem, the present application provides a battery cell, a battery, and an electric device. The battery cell exhibits high production efficiency.

In a first aspect, some embodiments of the present application provide a battery cell. The battery cell includes a housing, an electrode terminal, an electrode assembly, and an insulating member. The housing includes a wall part; the electrode terminal is disposed on the wall part; the electrode assembly is accommodated in the housing, the electrode assembly includes a first tab, and the first tab is electrically connected to the electrode terminal; the insulating member includes a first insulating part and a second insulating part, the first insulating part surrounds an outer side of the first tab, and the second insulating part is connected to the first insulating part and is located between the wall part and the first tab.

In the above structure, since the first insulating part of the insulating member surrounds the outer side of the first tab, and the second insulating part is located between the wall part and the first tab, the insulating member can insulate and isolate the first tab from the housing, thereby reducing the insulation treatment processes such as applying an insulating adhesive to the first tab, and thus helping to improve the production efficiency of the battery cell.

In the battery cell according to some embodiments of the present application, a notch is provided in an end surface, facing away from the second insulating part, of the first insulating part, and the notch extends through the first insulating part in a thickness direction of the first insulating part, such that during the process of the first tab being inserted into a space enclosed by the first insulating part, the first insulating part is capable of opening at the notch, and the opening, facing away from the second insulating part, of the first insulating part, can be enlarged, thereby enabling the first tab to be easily inserted into the space enclosed by the first insulating part, and thus helping to improve the convenience of assembly of the battery cell.

In the battery cell according to some embodiments of the present application, the first insulating part is provided with a plurality of notches, and the plurality of notches are arranged along a circumferential direction of the first insulating part, such that the openings, facing away from the second insulating part, of the first insulating part can be uniformly enlarged, thereby helping to improve the smoothness of the insertion process of the first tab.

In the battery cell according to some embodiments of the present application, in a direction from the first insulating part toward the electrode assembly, a width of the notch in a circumferential direction of the first tab gradually increases, thereby facilitating the opening of the second insulating part being enlarged.

In the battery cell according to some embodiments of the present application, the battery cell further includes a current collecting member connected to the first tab, the first insulating part defines, in an enclosing manner, an accommodating inner cavity, the current collecting member is located in the accommodating inner cavity, and at least a portion of the current collecting member is located between the second insulating part and the first tab; a through hole in communication with the accommodating inner cavity is formed in the second insulating part, and the current collecting member is connected to the electrode terminal through the through hole.

In the battery cell according to some embodiments of the present application, in a thickness direction of the wall part, a dimension of the first insulating part is H1, a thickness of the current collecting member is H3, a dimension of the notch is H4, and H4 ≤ H1 - H3, such that the current collecting member can be completely surrounded by the first insulating part in its own circumferential direction, and the current collecting member is less likely to use the notch as a channel to leak current to the housing body, thereby helping to improve the reliability of the battery cell.

In the battery cell according to some embodiments of the present application, the electrode assembly further includes an electrode plate and a separator disposed in a stacked manner, and the first tab is connected to the electrode plate and extends beyond the separator; in the thickness direction of the wall part, the dimension of the first insulating part is H1, a distance by which the first tab extends beyond the separator is H2, the thickness of the current collecting member is H3, and H1 ≥ H2 + H3. As a result, the current collecting member and the portion of the first tab extending beyond the separator can be completely located in the accommodating space enclosed by the first insulating part, such that the first insulating part can enclose the current collecting member and the portion of the first tab extending beyond the separator, thereby reducing current leakage from the current collecting member and the portion of the first tab extending beyond the separator to the housing body, and thus helping to improve the reliability of the battery cell.

In the battery cell according to some embodiments of the present application, the first tab is of a cylindrical body, a length of the first tab in a winding direction is L1, a length of the electrode plate in a winding direction is L2, and L1/L2 ≥ 50%, such that the first tab has a sufficient length in the winding direction, thereby helping to improve the current passage capacity of the first tab.

In the battery cell according to some embodiments of the present application, the battery cell further includes a current collecting member connected to the first tab, the first insulating part defines, in an enclosing manner, an accommodating inner cavity, the current collecting member is located in the accommodating inner cavity, and at least a portion of the current collecting member is located between the second insulating part and the first tab; a through hole in communication with the accommodating inner cavity is formed in the second insulating part, and the current collecting member is connected to the electrode terminal through the through hole; the battery cell further includes an insulating structure, the insulating structure is disposed on a surface, facing the electrode assembly, of the wall part, and at least a portion of the insulating structure is located between the wall part and the second insulating part. By allowing the at least a portion of the insulating structure to be located between the wall part and the second insulating part, the wall part can press or block the second insulating part via the insulating structure, thereby helping to improve the stability of the insulating member mounted to the electrode assembly.

In the battery cell according to some embodiments of the present application, in a direction from the first insulating part toward the first tab, at least a portion of the insulating structure extends beyond an inner wall surface of the through hole to insulate the current collecting member from the wall part, such that the at least a portion of the insulating structure can cover the through hole and insulate the insulating member located in the accommodating inner cavity from the wall part.

In the battery cell according to some embodiments of the present application, the at least a portion of the insulating structure extending beyond the inner wall surface of the through hole abuts against the current collecting member to press the first tab. As a result, the current collecting member can press the first tab under the action of the insulating structure, such that the first tab is in a compressed state, and the first tab can be stably connected to the current collecting member under the action of its own elastic restoring force.

In the battery cell according to some embodiments of the present application, the at least a portion of the insulating structure is clamped between the wall part and the second insulating part, such that the insulating structure can push the insulating member to stably cover the end part of the electrode assembly, thereby reducing the possibility of detachment of the insulating member from the electrode assembly.

In the battery cell according to some embodiments of the present application, in the thickness direction of the wall part, an overlapping region between a projection of the insulating structure and a projection of the second insulating part is annular, a width of the overlapping region in a radial direction of the first tab is D, and D ≥ 0.8 mm, such that the overlapping region has a sufficient width to enable the pressing or blocking of the second insulating part by the insulating structure to be stable.

In the battery cell according to some embodiments of the present application, in the thickness direction of the wall part, a wall thickness of the second insulating part is T1, and 0.05 mm ≤ T1 ≤ 4 mm, such that the second insulating part has sufficient thickness to improve the structural strength of the insulating member, while reducing the likelihood of material waste caused by an excessive thickness of the second insulating part.

In the battery cell according to some embodiments of the present application, the first insulating part defines, in an enclosing manner, an accommodating inner cavity, and at least a portion of the first tab is accommodated in the accommodating inner cavity; in a direction from the first tab toward the first insulating part, a dimension of at least a portion of the accommodating inner cavity in the radial direction of the first tab decreases, such that the current collecting member and the first tab can be conveniently inserted into the accommodating inner cavity from an opening, away from the second insulating part, of the accommodating inner cavity.

In the battery cell according to some embodiments of the present application, a thickness of an end part region, away from the second insulating part, of the first insulating part is less than a thickness of an end part region, close to the second insulating part, of the first insulating part, such that the first insulating part changes the radial dimension of the accommodating inner cavity by changing its own wall thickness, thereby enabling the current collecting member and the first tab to be conveniently inserted into the accommodating inner cavity from the opening, away from the second insulating part, of the accommodating inner cavity.

In the battery cell according to some embodiments of the present application, in the direction from the first tab toward the first insulating part, a thickness of at least a portion of the first insulating part gradually increases, such that the thickness of the first insulating part varies continuously, thereby helping to reduce the possibility of stress concentration in the first insulating part.

In the battery cell according to some embodiments of the present application, the electrode assembly further includes a second tab having a polarity opposite to that of the first tab, and the second tab is electrically connected to the housing.

In the battery cell according to some embodiments of the present application, the housing includes a housing body and an end cover, and the housing body includes an end wall and a side wall; the side wall is disposed around an outer periphery of the end wall, one end of the side wall is connected to the end wall, and the other end of the side wall forms an opening opposite to the end wall; the end cover covers the opening, and the wall part is the end wall or the end cover.

In a second aspect, some embodiments of the present application further provide a battery. The battery includes the battery cell according to the foregoing technical solutions.

In a third aspect, some embodiments of the present application further provide an electric device. The electric device includes the battery according to the foregoing technical solutions, and the battery is configured to provide electrical energy.

The technical solutions provided in the embodiments of the present disclosure at least bring the following beneficial effects:

Some embodiments of the present application provide a battery cell. The battery cell includes a housing, an electrode terminal, an electrode assembly, and an insulating member. The electrode terminal is disposed on a wall part of the housing, the electrode assembly is accommodated in the housing, and a first tab of the electrode assembly is electrically connected to the electrode terminal; a first insulating part of the insulating member surrounds an outer side of the first tab, and a second insulating part is connected to the first insulating part and is located between the wall part and the first tab. In the above structure, since the first insulating part of the insulating member surrounds the outer side of the first tab, and the second insulating part is located between the wall part and the first tab, the insulating member can insulate and isolate the first tab from the housing, thereby reducing the insulation treatment processes such as applying an insulating adhesive to the first tab, and thus helping to improve the production efficiency of the battery cell.

The above description is only an overview of the technical solutions of the present application. To more clearly understand the technical means of the present application to enable implementation in accordance with the content of the specification and to make the above and other purposes, features, and advantages of the present application more obvious and easy to understand, the detailed description of the present application is provided below.

### BRIEF DESCRIPTION OF THE DRAWINGS

By reading the detailed description of the preferred embodiments below, various additional advantages and benefits will become clear to those of ordinary skill in the art. The drawings are provided solely for the purpose of illustrating the preferred embodiments and shall not be construed as limiting the present application. Furthermore, the same reference numerals in all the drawings denote identical components.
FIG. 1 is a schematic structural diagram of a vehicle according to some embodiments of the present application;
FIG. 2 is an exploded view of a battery according to some embodiments of the present application;
FIG. 3 is a schematic diagram of an internal structure of a battery cell according to some embodiments of the present application;
FIG. 4 is a schematic diagram of a disassembly of a battery cell according to some embodiments of the present application;
FIG. 5 is a top view of a battery cell according to some embodiments of the present application;
FIG. 6 is a cross-sectional view taken along line A-A in FIG. 5;
FIG. 7 is a front view of an insulating member of a battery cell according to some embodiments of the present application;
FIG. 8 is a top view of an insulating member of a battery cell according to some embodiments of the present application;
FIG. 9 is a cross-sectional view taken along line C-C in FIG. 8 according to some embodiments;
FIG. 10 is a cross-sectional view taken along line C-C in FIG. 8 according to some other embodiments;
FIG. 11 is a front view of an insulating member of a battery cell according to some other embodiments of the present application; and
FIG. 12 is an enlarged view of part B in FIG. 6.

In the drawings:
1, housing; 11, wall part; 12, housing body; 121, end wall; 122, side wall; 13, end cover; 2, electrode terminal; 3, electrode assembly; 32, first tab; 33, second tab; 34, separator; 35, electrode plate; 4, insulating member; 41, first insulating part; 411, notch; 412, accommodating inner cavity; 42, second insulating part; 421, through hole; 5, current collecting member; 6, insulating structure; 10, case; 101, first case; 102, second case; 20, battery cell; 1000, vehicle; 100, battery; 200, controller; 300, motor.

### DETAILED DESCRIPTION

To make the objectives, technical solutions, and advantages of embodiments of the present application clearer, the technical solutions in the embodiments of the present application will be clearly described hereinafter with reference to the drawings in the embodiments of the present application. It is apparent that the described embodiments are some, but not all, embodiments of the present application. Based on the embodiments in the present application, all other embodiments obtained by those of ordinary skill in the art without creative efforts shall fall within the protection scope of the present application.

Unless otherwise defined, all technical and scientific terms used in the present application have the same meaning as commonly understood by those skilled in the art to which the present application belongs. The terms used in the specification of the present application are only used to describe specific embodiments and are not intended to limit the present application. The terms "include", "comprise", "have", "provided with", and any variants thereof in the specification and claims of the present application and the above description of the drawings are intended to cover a non-exclusive inclusion. The terms "first", "second", and the like in the specification and claims of the present application and the above drawings are used to distinguish different objects and are not intended to describe a specific order or priority.

Reference in the present application to "embodiment" means that a particular feature, structure, or characteristic described in connection with the embodiment can be included in at least one embodiment of the present application. The references of the word in the context of the specification do not necessarily refer to the same embodiment, nor to separate or alternative embodiments exclusive of other embodiments.

In the description of the present application, it should be noted that unless otherwise explicitly specified or limited, the terms "mount", "interconnect", "connect", and "attach" shall be construed broadly and may be, for example, fixed connection, detachable connection, or integrated connection, or direct connection, indirect connection via an intermediate, or a communication between interiors of two elements. For those of ordinary skill in the art, the specific meanings of the above terms in the present application can be understood based on specific conditions.

In the present application, the term "and/or" is merely a way to describe the association relationship between associated objects and indicates that there may be three relationships. For example, A and/or B may indicate that: only A is present, both A and B are present, and only B is present. In addition, the character "/" in the present application generally indicates an "or" relationship between the associated objects before and after the "/".

In the embodiments of the present application, the same reference numerals represent the same components, and for the sake of brevity, detailed descriptions of the same components are omitted in different embodiments. It should be understood that the thickness, length, width, and other dimensions of various components in the embodiments of the present application shown in the drawings, as well as the overall thickness, length, width, and other dimensions of the integrated device, are only exemplary and should not be construed as limiting the present application in any way.

In the embodiments of the present application, "parallel" includes not only a case of being absolutely parallel, but also a case of being approximately parallel according to common knowledge in engineering. In addition, "perpendicular" includes not only a case of being absolutely perpendicular, but also a case of being approximately perpendicular according to common knowledge in engineering. Illustratively, if the included angle between two directions is 85° to 90°, it may be considered that the two directions are perpendicular; if the included angle between two directions is 0° to 5°, it may be considered that the two directions are parallel.

The term "plurality of" used in the present application refers to no less than two (including two).

At present, judging from the trends of the market situation, the application of batteries is becoming increasingly widespread. Batteries are not only applied in energy storage power systems such as hydropower, thermal power, wind power, and solar power stations, but also widely applied in electric transportation vehicles such as electric bicycles, electric motorcycles, or electric cars, as well as in military equipment, aerospace, and other fields.

In the embodiments of the present application, the battery cell may be a secondary battery cell. The secondary battery cell refers to a battery cell that can be reused by activating the active material through charging after the battery cell is discharged.

The battery cell may be a lithium-ion battery cell, a sodium-ion battery cell, a sodium-lithium-ion battery cell, a lithium metal battery cell, a sodium metal battery cell, a lithium-sulfur battery cell, a magnesium-ion battery cell, a nickel-hydrogen battery cell, a nickel-cadmium battery cell, a lead storage battery cell, or the like. This is not limited in the embodiments of the present application.

The battery cell generally includes an electrode assembly. The electrode assembly includes a positive electrode and a negative electrode. During the charging and discharging process of the battery cell, active ions (such as lithium ions) are intercalated and deintercalated back and forth between the positive electrode and the negative electrode.

In some embodiments, the electrode assembly further includes a separator. The separator is disposed between the positive electrode and the negative electrode to prevent the positive electrode and the negative electrode from short-circuiting, while allowing the passage of active ions.

In some embodiments, the positive electrode may be a positive electrode plate, and the positive electrode plate may include a positive electrode current collector and a positive electrode active substance layer disposed on at least one surface of the positive electrode current collector.

As an example, the positive electrode current collector has two surfaces opposite to each other in its own thickness direction, and the positive electrode active substance layer is disposed on either or both of the two opposite surfaces of the positive electrode current collector.

As an example, a metal foil or a composite current collector may be used as the positive electrode current collector. For example, for the metal foil, stainless steel, copper, aluminum, nickel, aluminum treated with silver on the surface, stainless steel treated with silver on the surface, carbon electrode, carbon, nickel, titanium, or the like may be used. The composite current collector may include a polymer material base layer and a metal layer. The composite current collector may be formed by forming a metal material (aluminum, aluminum alloy, nickel, nickel alloy, titanium, titanium alloy, silver, silver alloy, or the like) on a polymer material substrate (such as polypropylene, polyethylene terephthalate, polybutylene terephthalate, polystyrene, or polyethylene).

As an example, the positive electrode active substance layer includes a positive electrode active material. The positive electrode active material may include at least one of the following materials: a lithium-containing phosphate, a lithium transition metal oxide, and respective modified compounds thereof. However, the present application is not limited to these materials, and other conventional materials that can be used as positive electrode active materials for batteries may also be used. These positive electrode active materials may be used alone or in a combination of two or more. Examples of the lithium-containing phosphate may include, but are not limited to, at least one of lithium iron phosphate (such as LiFePO₄ (also referred to as LFP)), a composite material of lithium iron phosphate and carbon, lithium manganese phosphate (such as LiMnPO₄), a composite material of lithium manganese phosphate and carbon, lithium manganese iron phosphate, and a composite material of lithium manganese iron phosphate and carbon. Examples of the lithium transition metal oxide may include, but are not limited to, at least one of a lithium cobalt oxide (such as LiCoO₂), a lithium nickel oxide (such as LiNiO₂), a lithium manganese oxide (such as LiMnO₂ or LiMn₂O₄), a lithium nickel cobalt oxide, a lithium manganese cobalt oxide, a lithium nickel manganese oxide, and a lithium nickel cobalt manganese oxide (such as LiNi_{1/3}Co_{1/3}Mn_{1/3}O₂ (also referred to as NCM₃₃₃), LiNi_{0.5}Co_{0.2}Mn_{0.3}O₂ (also referred to as NCM₅₂₃), LiNi_{0.5}Co_{0.25}Mn_{0.25}O₂ (also referred to as NCM₂₁₁), LiNi_{0.6}Co_{0.2}Mn_{0.2}O₂ (also referred to as NCM₆₂₂), or LiNi_{0.8}Co_{0.1}Mn_{0.1}O₂ (also referred to as NCM₈₁₁)), a lithium nickel cobalt aluminum oxide (such as LiNi_{0.80}Co_{0.15}Al_{0.05}O₂), and modified compounds thereof.

In some embodiments, a foam carbon or a foam metal may be used as the positive electrode. The foam metal may be foam nickel, foam copper, foam aluminum, foam alloy, or the like. When the foam metal is used as the positive electrode, the surface of the foam metal may not be provided with the positive electrode active material. Certainly, the positive electrode active material may also be provided. As an example, a lithium source material, a potassium metal, or a sodium metal may also be incorporated into and/or deposited in the foam metal; the lithium source material is a lithium metal and/or a lithium-rich material.

In some embodiments, the negative electrode may be a negative electrode plate, and the negative electrode plate may include a negative electrode current collector and a negative electrode active substance layer disposed on at least one surface of the negative electrode current collector.

As an example, a metal foil, a foam metal, a foam carbon, or a composite current collector may be used as the negative electrode current collector. For example, for the metal foil, stainless steel, copper, aluminum, nickel, aluminum treated with silver on the surface, stainless steel treated with silver on the surface, carbon electrode, carbon, nickel, titanium, or the like may be used. The foam metal may be foam nickel, foam copper, foam aluminum, foam alloy, or the like. The composite current collector may include a polymer material base layer and a metal layer. The composite current collector may be formed by forming a metal material (copper, copper alloy, nickel, nickel alloy, titanium, titanium alloy, silver, silver alloy, or the like) on a polymer material substrate (such as polypropylene, polyethylene terephthalate, polybutylene terephthalate, polystyrene, or polyethylene).

As an example, the negative electrode active material may be a negative electrode active material known in the art for use in battery cells. As an example, the negative electrode active material may include at least one of the following materials: artificial graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, the present application is not limited to these materials, and other conventional materials that can be used as negative electrode active materials for batteries may also be used. These negative electrode active materials may be used alone or in combination of two or more.

In some embodiments, a foam carbon or a foam metal may be used as the negative electrode. The foam metal may be foam nickel, foam copper, foam aluminum, foam alloy, or the like. When the foam metal is used as the negative electrode plate, the surface of the foam metal may not be provided with the negative electrode active material. Certainly, the negative electrode active material may also be provided.

As an example, a lithium source material, a potassium metal, or a sodium metal may also be incorporated into and/or deposited in the negative electrode current collector; the lithium source material is a lithium metal and/or a lithium-rich material.

In some embodiments, the material of the positive electrode current collector may be aluminum, and the material of the negative electrode current collector may be copper.

In some embodiments, the electrode assembly further includes a separator. The separator is disposed between the positive electrode plate and the negative electrode plate.

In some embodiments, the separator is a separation film. The present application does not particularly limit the type of separation film, and any porous-structure separation film known to have good chemical stability and mechanical stability may be selected.

As an example, the main material of the separation film may be selected from at least one of glass fiber, non-woven fabric, polyethylene, polypropylene, polyvinylidene fluoride, and ceramic. The separation film may be a single-layer film or a multi-layer composite film, which is not specified. When the separation film is a multi-layer composite film, the materials of the layers may be the same or different, which is not specified. The separator may be a separate component located between the positive electrode and the negative electrode, or may be attached to the surfaces of the positive electrode and the negative electrode.

In some embodiments, the separator is a solid-state electrolyte. The solid-state electrolyte is disposed between the positive electrode plate and the negative electrode plate, serving both to transport ions and to isolate the positive electrode from the negative electrode.

In some embodiments, the battery cell further includes an electrolyte that serves to conduct ions between the positive electrode and the negative electrode. The present application does not particularly limit the type of electrolyte, which may be selected based on requirements. The electrolyte may be liquid-state, gel-state, or solid-state.

In some embodiments, the liquid-state electrolyte includes an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluorobis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone. The solvent may also be selected from an ether solvent. The ether solvent may include one or more of ethylene glycol dimethyl ether, ethylene glycol diethyl ether, diethylene glycol dimethyl ether, triethylene glycol dimethyl ether, tetraethylene glycol dimethyl ether, 1,3-dioxolane, tetrahydrofuran, methyl tetrahydrofuran, diphenyl ether, and crown ether.

The gel-state electrolyte includes a skeleton network with a polymer as an electrolyte, combined with an ionic liquid-lithium salt.

The solid-state electrolyte includes a polymer solid-state electrolyte, an inorganic solid-state electrolyte, and a composite solid-state electrolyte.

As an example, the polymer solid-state electrolyte may be polyether (polyethylene oxide), polysiloxane, polycarbonate, polyacrylonitrile, polyvinylidene fluoride, polymethyl methacrylate, single-ion polymer, polyionic liquid-lithium salt, cellulose, or the like.

As an example, the inorganic solid-state electrolyte may be one or more of an oxide solid electrolyte (crystalline perovskite, sodium superionic conductor, garnet, and amorphous LiPON thin film), a sulfide solid electrolyte (crystalline lithium superionic conductor (lithium germanium phosphorus sulfur, argyrodite), and amorphous sulfide), a halide solid electrolyte, a nitride solid electrolyte, and a hydride solid electrolyte.

As an example, the composite solid-state electrolyte is formed by adding an inorganic solid-state electrolyte filler to the polymer solid electrolyte.

In some embodiments, the electrode assembly is of a wound structure. The positive electrode plate and the negative electrode plate are wound to form a wound structure.

In some embodiments, the electrode assembly is of a stacked structure.

As an example, a plurality of positive electrode plates and a plurality of negative electrode plates may be provided, and the plurality of positive electrode plates and the plurality of negative electrode plates are alternately stacked.

As an example, a plurality of positive electrode plates may be provided, and the negative electrode plate is folded to form a plurality of stacked folded segments, with one positive electrode plate disposed between adjacent folded segments.

As an example, the positive electrode plate and the negative electrode plate are both folded to form a plurality of stacked folded segments.

As an example, a plurality of separators may be provided and are separately disposed between any adjacent positive electrode plates or negative electrode plates.

As an example, the separators may be provided continuously and are disposed between any adjacent positive electrode plates or negative electrode plates by means of folding or winding.

In some embodiments, the shape of the electrode assembly may be cylindrical, flat, polygonal prismatic, or the like.

In some embodiments, the electrode assembly is provided with tabs that can conduct current out from the electrode assembly. The tabs include a positive electrode tab and a negative electrode tab.

In some embodiments, the battery cell may include a housing. The housing is configured to enclose components such as the electrode assembly and the electrolyte. The housing may be a steel housing, an aluminum housing, a plastic housing (such as polypropylene), a composite metal housing (such as a copper-aluminum composite housing), an aluminum-plastic film, or the like.

As an example, the battery cell may be a cylindrical battery cell, a prismatic battery cell, a pouch battery cell, or a battery cell of other shapes. The prismatic battery cell includes a square-shell battery cell, a blade-shaped battery cell, and a multi-prismatic battery, and the multi-prismatic battery is, for example, a hexagonal prismatic battery.

The battery mentioned in the embodiments of the present application refers to a single physical module including one or a plurality of battery cells to provide higher voltage and capacity.

In some embodiments, the battery may be a battery module, and when a plurality of battery cells are provided, the plurality of battery cells are arranged and fixed to form one battery module.

In some embodiments, the battery may be a battery pack. The battery pack includes a case and a battery cell, and the battery cell or the battery module is accommodated in the case.

In some embodiments, the case may be a portion of the chassis structure of the vehicle. For example, a portion of the case may become at least a portion of the floor of the vehicle, or a portion of the case may become at least a portion of a crossbeam and a longitudinal beam of the vehicle.

In some embodiments, the battery may be an energy storage device. The energy storage device includes an energy storage container, an energy storage electrical cabinet, and the like.

At present, in order to achieve insulation between the housing and the electrode assembly, the electrode assembly in the prior art is usually provided with an insulating adhesive wound around an outer periphery of a tab, which not only reduces the production efficiency of the battery cell, but also affects the yield of the battery cell due to improper winding of the insulating adhesive.

In order to improve the production efficiency of the battery cell, some embodiments of the present application provide a battery cell. The battery cell includes a housing, an electrode terminal, an electrode assembly, and an insulating member. The electrode terminal is disposed on a wall part of the housing, the electrode assembly is accommodated in the housing, and a first tab of the electrode assembly is electrically connected to the electrode terminal; a first insulating part of the insulating member surrounds an outer side of the first tab, and a second insulating part is connected to the first insulating part and is located between the wall part and the first tab. In the above structure, since the first insulating part of the insulating member surrounds the outer side of the first tab, and the second insulating part is located between the wall part and the first tab, the insulating member can insulate and isolate the first tab from the housing, thereby reducing the insulation treatment processes such as applying an insulating adhesive to the first tab, and thus helping to improve the production efficiency of the battery cell.

The battery cell described in the embodiments of the present application is applicable to batteries and electric devices that use batteries. The battery cell may, but is not limited to, be used in batteries, and may also be used in products such as vehicles, airplanes, ships, electronic devices, and electric tools, thereby improving the reliability of these products.

The electric device may be a vehicle, a mobile phone, a portable device, a laptop computer, a ship, a spacecraft, an electric toy, an electric tool, or the like. The vehicle may be a fuel vehicle, a gas vehicle, or a new energy vehicle, and the new energy vehicle may be a pure electric vehicle, a hybrid vehicle, an extended-range vehicle, or the like; the spacecraft includes an airplane, a rocket, a space shuttle, a spaceship, and the like; the electric toy includes a stationary or mobile electric toy, such as a game console, an electric car toy, an electric ship toy, and an electric airplane toy; the electric tool includes an electric metal cutting tool, an electric grinding tool, an electric assembling tool, and an electric tool for railways, such as an electric drill, an electric grinder, an electric wrench, an electric screwdriver, an electric hammer, an electric impact drill, a concrete vibrator, and an electric planer.

For ease of explanation, the following embodiments are described by taking a vehicle 1000 as an example of the electric device according to an embodiment of the present application.

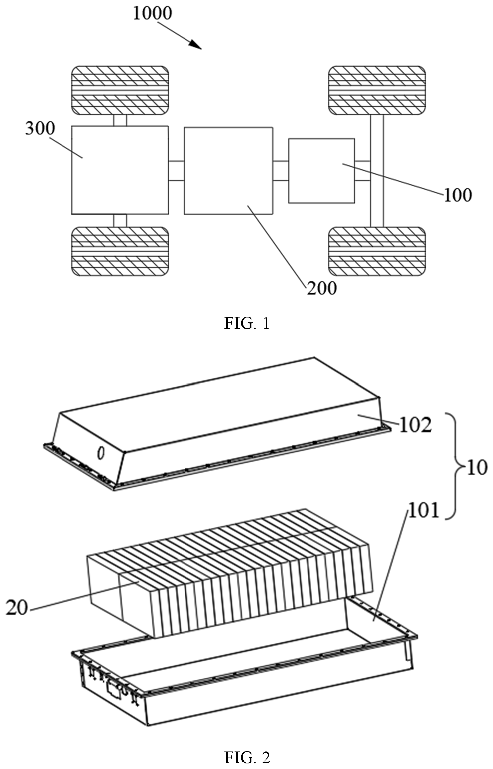

Referring to FIG. 1, FIG. 1 is a schematic structural diagram of a vehicle 1000 according to some embodiments of the present application. The vehicle 1000 may be a fuel vehicle, a gas vehicle, or a new energy vehicle. The new energy vehicle may be a pure electric vehicle, a hybrid vehicle, an extended-range vehicle, or the like. A battery 100 is disposed inside the vehicle 1000, and the battery 100 may be disposed at the bottom, head, or tail of the vehicle 1000. The battery 100 may be configured to supply power to the vehicle 1000. For example, the battery 100 may serve as an operation power source for the vehicle 1000. The vehicle 1000 may further include a controller 200 and a motor 300. The controller 200 is configured to control the battery 100 to supply power to the motor 300, e.g., for the operation power needed by the vehicle 1000 for start-up, navigation, and driving.

In some embodiments of the present application, the battery 100 may not only serve as the operation power source for the vehicle 1000, but also as a driving power source for the vehicle 1000 to, replacing or partially replacing fuel or natural gas, provide driving power for the vehicle 1000.

Referring to FIG. 2, FIG. 2 is an exploded view of a battery 100 according to some embodiments of the present application. The battery 100 includes a case 10 and battery cells 20. The battery cells 20 are accommodated in the case 10. The case 10 is configured to provide an accommodating space for the battery cells 20. In the battery 100, a plurality of battery cells 20 may be provided, and the plurality of battery cells 20 may be connected in series, in parallel, or in series-parallel. The series-parallel connection means that both series connection and parallel connection are present for the connection among the plurality of battery cells 20. The plurality of battery cells 20 may be directly connected in series, in parallel, or in series-parallel, and then the whole formed by the plurality of battery cells 20 is accommodated in the case 10. Certainly, the situation may also be that in the battery 100, the plurality of battery cells 20 are first connected in series, in parallel, or in series-parallel to form battery modules, and then the plurality of battery modules are connected in series, in parallel, or in series-parallel to form a whole and accommodated in the case 10.

The case 10 may include a first case 101 and a second case 102. The first case 101 and the second case 102 cover each other to define a placement space for accommodating the battery cell 20. The first case 101 and the second case 102 may be in various shapes, such as a rectangular parallelepiped and a cylinder. The first case 101 may be of a hollow structure with one side open, the second case 102 may also be of a hollow structure with one side open, and the open side of the first case 101 covers the open side of the second case 102 to form the case 10 having a placement space.

The battery 100 may further include other structures. For example, the battery 100 may further include a busbar component for achieving an electrical connection among the plurality of battery cells 20.

Each battery cell 20 may be a secondary battery or a primary battery; it may also be a lithium-sulfur battery, a sodium-ion battery, or a magnesium-ion battery, but is not limited thereto. The battery cell 20 may be cylindrical, flat, rectangular parallelepiped-shaped, or in other shapes.

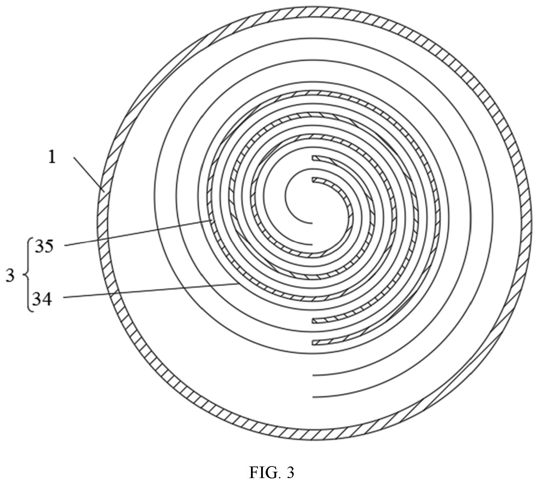

In some embodiments of the present application, as shown in FIG. 3, the battery cell 20 includes a housing 1 and an electrode assembly 3. The electrode assembly 3 is accommodated in the housing 1. The housing 1 may be a wall body structure disposed at an outer periphery of the battery cell 20, which can form an accommodating cavity for accommodating other components of the battery cell 20, such as the electrode assembly 3, and an electrolyte. The electrode assembly 3, as a component accommodated in the housing 1, is in contact with the electrolyte, and active ions (e.g., lithium ions) can be conducted between the electrode assembly 3 and the electrolyte.

The housing 1 includes an end cover and a housing body. The housing body has an opening, and the end cover covers the opening.

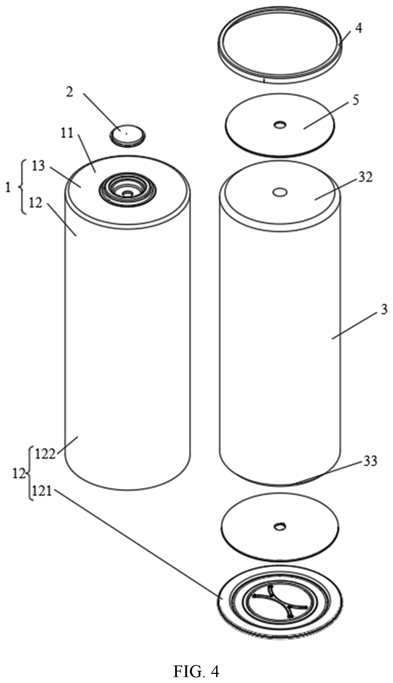

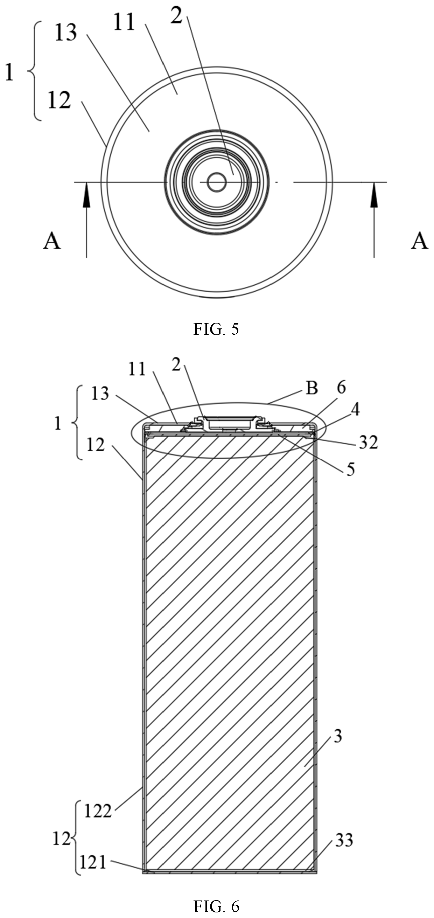

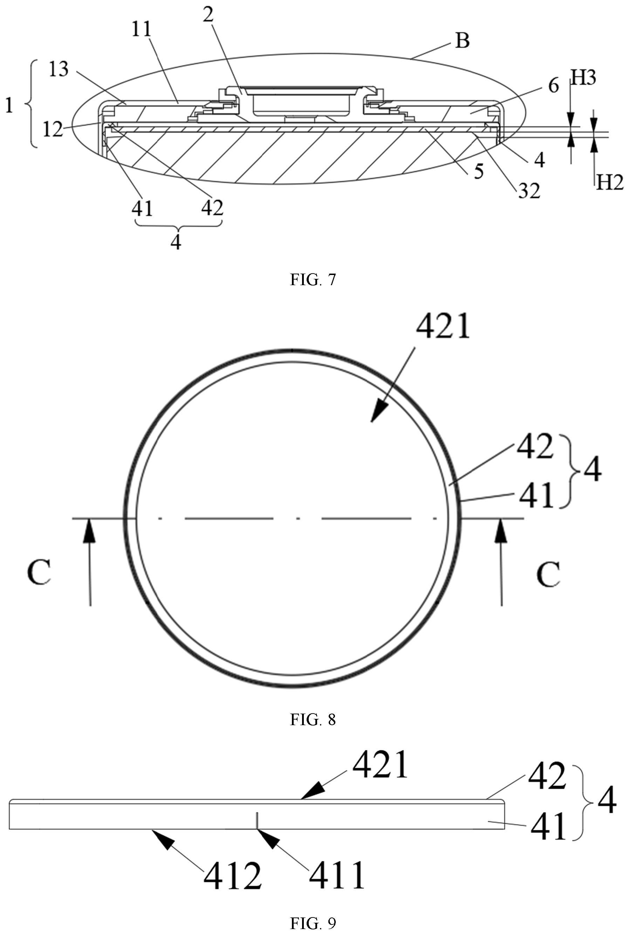

In some embodiments of the present application, further referring to FIGs. 4 to 6, some embodiments of the present application provide a battery cell 20. The battery cell 20 includes a housing 1, an electrode terminal 2, an electrode assembly 3, and an insulating member 4. The housing 1 includes a wall part 11. The electrode terminal 2 is disposed on the wall part 11. The electrode assembly 3 is accommodated in the housing 1, the electrode assembly 3 includes a first tab 32, and the first tab 32 is electrically connected to the electrode terminal 2. Further referring to FIGs. 7 and 8, the insulating member 4 includes a first insulating part 41 and a second insulating part 42. Further referring to FIG. 7, the first insulating part 41 surrounds an outer side of the first tab 32, and the second insulating part 42 is connected to the first insulating part 41 and is located between the wall part 11 and the first tab 32.

In the embodiments of the present application, the housing 1 of the battery cell 20 may include an end cover 13 and a housing body 12. The end cover is sealingly connected to the housing body to jointly define, in an enclosing manner, an accommodating space configured to accommodate components such as the electrode assembly 3. Illustratively, the housing body 12 may be a tubular structure having an opening at at least one end, the end cover 13 sealingly covers the opening, and the end cover 13 and the housing body 12 jointly form an accommodating space configured to accommodate the electrode assembly 3, an electrolyte, and other components. The wall part 11 may be a partial structure of the housing 1, and may be the end cover 13 or a partial structure of the housing body 12.

The electrode terminal 2 may be a connection terminal disposed on the wall part 11 of the housing 1, which is electrically connected to the electrode assembly 3 in the battery cell 20 and protrudes outward from the housing 1. The electrode terminal 2 is configured to be electrically connected to an external electric device to deliver electrical energy to the external electric device. The electrode terminal 2 includes, but is not limited to, a cylindrical structure, and may also be of other shapes, such as a prismatic structure.

The electrode assembly 3 may include a first tab 32, an electrode plate 35, and a separator 34. The electrode plate 35 may include a positive electrode plate and a negative electrode plate that have opposite polarities. The positive electrode plate and the negative electrode plate may serve as a positive electrode and a negative electrode, respectively. The separator 34 is disposed in a stacked manner between the positive electrode plate and the negative electrode plate to separate the positive electrode plate from the negative electrode plate. A surface of a positive electrode current collector in the positive electrode plate is coated with a positive electrode active substance layer, a surface of a negative electrode current collector in the negative electrode plate is coated with a negative electrode active substance layer, and the first tab 32 is connected to the positive electrode current collector or the negative electrode current collector and extends outward from an end, facing the wall part 11, of the positive electrode current collector or the negative electrode current collector. The first tab 32 is electrically connected to the electrode terminal 2, such that the electrode plate 35 can be electrically connected to the electrode terminal 2.

The insulating member 4 may be a component having insulating properties, and may be made of an insulating material, such as rubber or plastic. The first insulating part 41 and the second insulating part 42 are partial structures of the insulating member 4, respectively, and are connected to each other. The first insulating part 41 surrounding the outer side of the first tab 32 may be that the first insulating part 41 is of a tubular structure, and the first insulating part 41 is sleeved on the outer side of the first tab 32, so as to achieve insulation between the first tab 32 and the housing 1.

The second insulating part 42 may be a part connected to the end part of the first insulating part 41. The second insulating part 42 is connected to the end part of the first insulating part 41 in its own axial direction, such that in a state where the first insulating part 41 is sleeved on the outer side of the first tab 32, the second insulating part 42 is located between the wall part 11 and the first tab 32 and is configured to insulate the first tab 32 from the wall part 11.

In the above structure, since the first insulating part 41 of the insulating member 4 surrounds the outer side of the first tab 32, and the second insulating part 42 is located between the wall part 11 and the first tab 32, the insulating member 4 can insulate and isolate the first tab 32 from the housing 1, thereby reducing the insulation treatment processes such as applying an insulating adhesive to the first tab 32, and thus helping to improve the production efficiency of the battery cell 20.

Illustratively, the insulating member 4 is of an integrally formed structure. The first insulating part 41 and the second insulating part 42 may be integrally formed using an injection molding process, such that the insulating member 4 achieves good structural strength.

In some embodiments, further referring to FIGs. 9 to 12, a notch 411 is provided on an end surface, facing away from the second insulating part 42, of the first insulating part 41, and the notch 411 extends through the first insulating part 41 in a thickness direction of the first insulating part 41.

The notch 411 may be a structure formed in the first insulating part 41 by removing material. The notch 411 that is recessed inward is provided in the end surface, facing away from the second insulating part 42, of the first insulating part 41, and the notch 411 is configured to extend through the first insulating part 41 in the thickness direction of the first insulating part 41, such that during the process of the first tab 32 being inserted into a space enclosed by the first insulating part 41, the first insulating part 41 is capable of opening at the notch 411, and the opening, facing away from the second insulating part 42, of the first insulating part 41 can be enlarged, thereby enabling the first tab 32 to be easily inserted into the space enclosed by the first insulating part 41, and thus helping to improve the convenience of assembly of the battery cell 20.

In some embodiments, the first insulating part 41 is provided with a plurality of notches 411, and the plurality of notches 411 are arranged along a circumferential direction of the first insulating part 41.

By providing the plurality of notches 411 in the first insulating part 41 and arranging the plurality of notches 411 along the circumferential direction of the first insulating part 41, the openings, facing away from the second insulating part 42, of the first insulating part 41 can be more easily enlarged during the process of the first tab 32 being inserted into the space enclosed by the first insulating part 41, thereby further facilitating the insertion of the first tab 32 into the space enclosed by the first insulating part 41.

The plurality of notches 411 being arranged along the circumferential direction of the first insulating part 41 may be the plurality of notches 411 being equally spaced apart from each other along the circumferential direction of the first insulating part 41, such that the openings, facing away from the second insulating part 42, of the first insulating part 41 can be uniformly enlarged, thereby helping to improve the smoothness of the insertion process of the first tab 32.

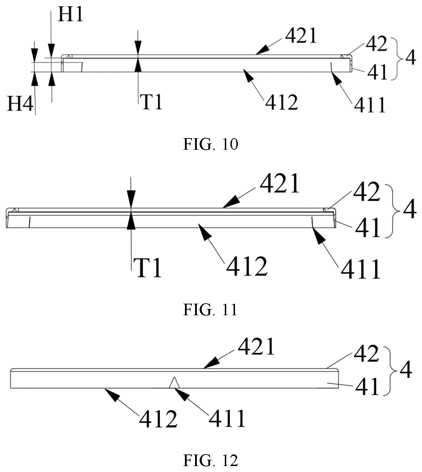

In some embodiments, further referring to FIG. 12, in a direction from the first insulating part 41 toward the electrode assembly 3, the width of the notch 411 in a circumferential direction of the first tab 32 gradually increases.

By configuring the width of the notch 411 in the circumferential direction of the first tab 32 to gradually increase in the direction from the first insulating part 41 toward the electrode assembly 3, the notch 411 can be of a V-shaped structure with an opening facing away from the first insulating part 41, which facilitates the opening of the second insulating part 42 being enlarged.

In some embodiments, further referring to FIG. 7, the battery cell 20 further includes a current collecting member 5 connected to the first tab 32. The first insulating part 41 defines, in an enclosing manner, an accommodating inner cavity 412, the current collecting member 5 is located in the accommodating inner cavity 412, and at least a portion of the current collecting member 5 is located between the second insulating part 42 and the first tab 32. A through hole 421 in communication with the accommodating inner cavity 412 is formed in the second insulating part 42, and the current collecting member 5 is connected to the electrode terminal 2 through the through hole 421.

The current collecting member 5 may be a component connected to the plurality of first tabs 32 in the electrode assembly 3, and can collect currents drawn via the plurality of first tabs 32 to facilitate the electrical connection between the first tabs 32 and the electrode terminal 2.

The accommodating inner cavity 412 may be a space enclosed by the first insulating part 41, and is configured to accommodate the current collecting member 5 and at least a portion of the first tab 32.

The through hole 421 may be a hole-shaped structure provided in the second insulating part 42 and extending through the second insulating part in a thickness direction of the second insulating part 42. Since the second insulating part 42 is provided with the through hole 421 extending through the second insulating part in the thickness direction of the second insulating part 42, and the through hole 421 communicates the accommodating inner cavity 412 with the outside, the current collecting member 5 located in the accommodating inner cavity 412 can be connected to the electrode terminal 2 through the through hole 421.

The at least a portion of the current collecting member 5 being located between the second insulating part 42 and the first tab 32 may mean that the diameter of the current collecting member 5 is greater than the diameter of the through hole 421, such that a portion of the current collecting member 5 is located between the second insulating part 42 and the first tab 32, and the other portion of the current collecting member 5 corresponds to the through hole 421 and is electrically connected to the electrode terminal 2 through the through hole 421.

In some embodiments, in a thickness direction of the wall part 11, the dimension of the first insulating part 41 is H1, the thickness of the current collecting member 5 is H3, the dimension of the notch 411 is H4, and H4 ≤ H1 - H3.

The dimension of the first insulating part 41 in the thickness direction of the wall part 11 is set to H1, the thickness of the current collecting member 5 in the thickness direction of the wall part 11 is set to H3, the dimension of the notch 411 in the thickness direction of the wall part 11 is set to H4, and H4 ≤ H1 - H3, such that the depth of the accommodating inner cavity 412 in the thickness direction of the wall part 11 minus the depth of the current collecting member 5 in the thickness direction of the wall part 11 is greater than the dimension of the notch 411 in the thickness direction of the wall part 11. As a result, the current collecting member 5 can be completely surrounded by the first insulating part 41 in its own circumferential direction, and the current collecting member 5 is less likely to use the notch 411 as a channel to leak current to the housing body 12, thereby helping to improve the reliability of the battery cell 20.

In some embodiments, H4 ≤ H1 - H3 - 0.2 mm, such that the current collecting member 5 can be better surrounded by the first insulating part 41 in its own circumferential direction, and the current collecting member 5 is less likely to use the notch 411 as a channel to leak current to the housing body 12, thereby helping to improve the reliability of the battery cell 20.

In some embodiments, the electrode assembly 3 further includes an electrode plate 35 and a separator 34 disposed in a stacked manner, and the first tab 32 is connected to the electrode plate 35 and extends beyond the separator 34. In the thickness direction of the wall part 11, the dimension of the first insulating part 41 is H1, a distance by which the first tab 32 extends beyond the separator 34 is H2, the thickness of the current collecting member 5 is H3, and H1 ≥ H2 + H3.

The first tab 32, as a component disposed on the electrode plate 35 and configured to be electrically connected to the current collecting member 5 of the battery cell 20, is disposed at an end part of the electrode plate 35 in the thickness direction of the wall part 11, such that the end part of the electrode plate 35 in the thickness direction of the wall part 11 can be connected to the current collecting member 5 via the first tab 32.

Illustratively, a plurality of first tabs 32 spaced apart from each other are disposed at the end part of the electrode plate 35, such that the electrode plate 35 can achieve uniform and stable electrical energy transfer with other components via the plurality of first tabs 32.

The electrode plates 35 and the separators 34 being disposed in a stacked manner may mean that the electrode assembly 3 is of a stacked structure, and the electrode plates 35 and the separators 34 in a sheet shape are stacked layer by layer. Alternatively, it may mean that the electrode assembly 3 is of a wound structure, and the electrode plates 35 and the separators 34 in a long strip shape are stacked and then wound in a winding direction.

The first tab 32 being connected to the electrode plate 35 may mean that the first tab 32 is connected to the current collector in the electrode plate 35. By extending the first tab 32 beyond the separator 34, the first tab 32 can draw current from the electrode plate 35 to the outside.

The dimension of the first insulating part 41 in the thickness direction of the wall part 11 is set to be H1, the distance by which the first tab 32 extends beyond the separator 34 in the thickness direction of the wall part 11 is set to be H2, and the thickness of the current collecting member 5 in the thickness direction of the wall part 11 is set to be H3. By setting H1 ≥ H2 + H3, the current collecting member 5 and the portion of the first tab 32 extending beyond the separator 34 can be completely located in the accommodating space enclosed by the first insulating part 41, such that the first insulating part 41 can enclose the current collecting member 5 and the portion of the first tab 32 extending beyond the separator 34, thereby reducing current leakage from the current collecting member 5 and the portion of the first tab 32 extending beyond the separator 34 to the housing body 12, and thus helping to improve the reliability of the battery cell 20.

In some embodiments, the first tab 32 is of a cylindrical body, the length of the first tab 32 in a winding direction is L1, the length of the electrode plate 35 in a winding direction is L2, and L1/L2 ≥ 50%.

Further referring to FIG. 3, the electrode assembly 3 is of a wound structure; the first tab 32 being of a cylindrical body may be that the first tab 32 extending beyond the separator 34 is subjected to a flattening process, and then has a cylindrical structure.

By setting the length of the first tab 32 in the winding direction to L1 and the length of the electrode plate 35 in the winding direction to L2, and satisfying L1/L2 ≥ 50%, the first tab 32 can have a sufficient length in the winding direction, thereby helping to improve the current passage capacity of the first tab 32.

Illustratively, the ratio L1/L2 of the length L1 of the first tab 32 in the winding direction to the length L2 of the electrode plate 35 in the winding direction may be 50%, 60%, or 70%, such that the first tab 32 has a sufficient length in the winding direction, thereby helping to improve the current passage capacity of the first tab 32.

In some embodiments, the battery cell 20 further includes a current collecting member 5 connected to the first tab 32. The first insulating part 41 defines, in an enclosing manner, an accommodating inner cavity 412, the current collecting member 5 is located in the accommodating inner cavity 412, and at least a portion of the current collecting member 5 is located between the second insulating part 42 and the first tab 32. A through hole 421 in communication with the accommodating inner cavity 412 is formed in the second insulating part 42, and the current collecting member 5 is connected to the electrode terminal 2 through the through hole 421. The battery cell 20 further includes an insulating structure 6, the insulating structure 6 is disposed on a surface, facing the electrode assembly 3, of the wall part 11, and at least a portion of the insulating structure 6 is located between the wall part 11 and the second insulating part 42.

The insulating structure 6 may refer to a structure having insulating properties, and may be made of an insulating material, such as rubber or plastic. The insulating structure 6 being disposed on the surface, facing the electrode assembly 3, of the wall part 11 may be that the insulating structure 6 may be formed by using the wall part 11 as an insert, such that the insulating material is molded on the surface, facing the electrode assembly 3, of the wall part 11.

By allowing the at least a portion of the insulating structure 6 to be located between the wall part 11 and the second insulating part 42, the wall part 11 can press or block the second insulating part 42 via the insulating structure 6, thereby helping to improve the stability of the insulating member 4 mounted to the electrode assembly 3.

In some embodiments, in a direction from the first insulating part 41 toward the first tab 32, at least a portion of the insulating structure 6 extends beyond an inner wall surface of the through hole 421 to insulate the current collecting member 5 from the wall part 11.

By allowing the at least a portion of the insulating structure 6 to extend beyond the inner wall surface of the through hole 421 in the direction from the first insulating part 41 toward the first tab 32, the at least a portion of the insulating structure 6 can cover the through hole 421 and insulate the insulating member 4 located in the accommodating inner cavity 412 from the wall part 11.

In some embodiments, the at least a portion of the insulating structure 6 extending beyond the inner wall surface of the through hole 421 abuts against the current collecting member 5 to press the first tab 32.

By allowing the at least a portion of the insulating structure 6 extending beyond the inner wall surface of the through hole 421 to abut against the current collecting member 5, the current collecting member 5 can press the first tab 32 under the action of the insulating structure 6, such that the first tab 32 is in a compressed state, and the first tab 32 can be stably connected to the current collecting member 5 under the action of its own elastic restoring force.

In some embodiments, the at least a portion of the insulating structure 6 is clamped between the wall part 11 and the second insulating part 42.

The at least a portion of the insulating structure 6 located between the wall part 11 and the second insulating part 42 is clamped between the wall part 11 and the second insulating part 42, such that the insulating structure 6 can push the insulating member 4 to stably cover the end part of the electrode assembly 3, thereby reducing the possibility of detachment of the insulating member 4 from the electrode assembly 3.

In some embodiments, in the thickness direction of the wall part 11, an overlapping region between a projection of the insulating structure 6 and a projection of the second insulating part 42 is annular, the width of the overlapping region in a radial direction of the first tab 32 is D, and D ≥ 0.8 mm.

The overlapping region between the projection of the insulating structure 6 in the thickness direction of the wall part 11 and the projection of the second insulating part 42 in the thickness direction of the wall part 11 is configures to be annular, such that the insulating structure 6 presses or blocks the second insulating part 42 along the entire circumferential direction of the through hole 421, which is conducive to improving the stability of the action on the second insulating part 42.

The range of the width D of the overlapping region in the radial direction of the first tab 32 is set to D ≥ 0.8 mm, such that the overlapping region has a sufficient width to enable the pressing or blocking of the second insulating part 42 by the insulating structure 6 to be stable.

Illustratively, the width D of the overlapping region in the radial direction of the first tab 32 may be set to be 0.8 mm, 1 mm, or 1.2 mm, thereby enabling the pressing or blocking of the second insulating part 42 by the insulating structure 6 to be stable.

In some embodiments, in the thickness direction of the wall part 11, the wall thickness of the second insulating part 42 is T1, and 0.05 mm ≤ T1 ≤ 4 mm.

The range of the wall thickness T1 of the second insulating part 42 in the thickness direction of the wall part 11 is set to 0.05 mm ≤ T1 ≤ 4 mm, such that the second insulating part 42 has sufficient thickness to improve the structural strength of the insulating member 4, while reducing the likelihood of material waste caused by an excessive thickness of the second insulating part 42.

In some embodiments, 0.1 mm ≤ T1 ≤ 2 mm. Illustratively, T1 may be set to 0.5 mm, 1 mm, or 1.5 mm, such that the second insulating part 42 has sufficient thickness to improve the structural strength of the insulating member 4, while reducing the likelihood of material waste caused by an excessive thickness of the second insulating part 42.

In some embodiments, the first insulating part 41 defines, in an enclosing manner, an accommodating inner cavity 412, and at least a portion of the first tab 32 is accommodated in the accommodating inner cavity 412. In a direction from the first tab 32 toward the first insulating part 41, the dimension of at least a portion of the accommodating inner cavity 412 in the radial direction of the first tab 32 decreases.

The dimension of the at least a portion of the accommodating inner cavity 412 in the radial direction of the first tab 32 decreases in the direction from the first tab 32 toward the first insulating part 41, such that the radial dimension of the accommodating inner cavity 412 away from the first insulating part 41 is greater than the radial dimension of the accommodating inner cavity close to the first insulating part 41, thereby enabling the current collecting member 5 and the first tab 32 to be conveniently inserted into the accommodating inner cavity from an opening, away from the second insulating part 42, of the accommodating inner cavity 412.

Illustratively, the dimension of the at least a portion of the accommodating inner cavity 412 in the radial direction of the first tab 32 may gradually decrease, such that the radial dimension of the accommodating inner cavity 412 varies continuously; alternatively, the dimension of the at least a portion of the accommodating inner cavity 412 in the radial direction of the first tab 32 decreases in a stepwise manner, such that the radial dimension of the accommodating inner cavity 412 varies discontinuously.

In some embodiments, the thickness of an end part region, away from the second insulating part 42, of the first insulating part 41 is less than the thickness of an end part region, close to the second insulating part 42, of the first insulating part 41.

The thickness of an end part region, away from the second insulating part 42, of the first insulating part 41 is set to be less than the thickness of an end part region, close to the second insulating part 42, of the first insulating part 41, such that the first insulating part 41 can change the radial dimension of the accommodating inner cavity 412 by changing its own wall thickness, thereby enabling the current collecting member 5 and the first tab 32 to be conveniently inserted into the accommodating inner cavity from the opening, away from the second insulating part 42, of the accommodating inner cavity 412.

Illustratively, the thickness of the first insulating part 41 may vary continuously or in a stepwise manner, and those skilled in the art can change the thickness of the first insulating part 41 based on actual situations.

In some embodiments, further referring to FIG. 11, in the direction from the first tab 32 toward the first insulating part 41, the thickness of at least a portion of the first insulating part 41 gradually increases.

The thickness of at least a portion of the first insulating part 41 is configured to gradually increase in the direction from the first tab 32 toward the first insulating part 41, such that the thickness of the first insulating part 41 varies continuously, thereby helping to reduce the possibility of stress concentration in the first insulating part 41.

In some embodiments, the electrode assembly 3 further includes a second tab 33 having a polarity opposite to that of the first tab 32, and the second tab 33 is electrically connected to the housing 1.

The second tab 33 may be a component having a polarity opposite to that of the first tab 32 and configured to draw current from the electrode plate 35 to the outside. The second tab 33 extends beyond the separator 34 and is electrically connected to the housing 1.

In some embodiments, the housing 1 includes a housing body 12 and an end cover 13. The housing body 12 includes an end wall 121 and a side wall 122. The side wall 122 is disposed around an outer periphery of the end wall 121. One end of the side wall 122 is connected to the end wall 121, and the other end forms an opening opposite to the end wall 121. The end cover 13 covers the opening, and the wall part 11 is the end wall 121 or the end cover 13.

The housing body 12 may be a tubular structure having an opening at one end, the end cover 13 sealingly covers the opening, and the end cover 13 and the housing body 12 jointly form an accommodating space configured to accommodate components, such as the electrode assembly 3 and the insulating member 4, and an electrolyte. The side wall 122 may be a structure of the housing body 12 that is disposed around the outer periphery of the end wall 121. One end of the side wall 122 is connected to the end wall 121, and the other end forms the opening opposite to the end wall 121. Illustratively, the housing body 12 is of an integrally formed structure, and the end wall 121 and the side wall 122 are integrally formed by a stamping process.

The wall part 11 in the present application may be the end wall 121 or the end cover 13, such that the electrode terminal 2 is located at the end part of the battery cell 20, thereby facilitating the output of electrical energy from the battery cell 20 to the outside.

Some embodiments of the present application further provide a battery 100. The battery 100 includes the battery cell 20 according to the above technical solutions.

Some embodiments of the present application further provide an electric device. The electric device includes the battery 100 according to the above technical solutions, and the battery 100 is configured to provide electrical energy.

Some embodiments of the present application provide a battery cell 20. The battery cell 20 includes a housing 1, an electrode terminal 2, an electrode assembly 3, a current collecting member 5, and an insulating member 4. The electrode terminal 2 is disposed on a wall part 11 of the housing 1, the electrode assembly 3 is located in the housing 1, and the first tab 32 thereon is connected to the current collecting member 5. The current collecting member 5 and the first tab 32 are located in an accommodating inner cavity 412 formed by the insulating member 4. A first insulating part 41 of the insulating member 4 surrounds outer sides of the first tab 32 and the current collecting member 5, the current collecting member 5 is connected to the electrode terminal 2 through a through hole 421 of a second insulating part 42, and a notch 411 extending through the first insulating part 41 is provided in an end surface, facing away from the second insulating part 42, of the first insulating part 41. In the above structure, since the first insulating part 41 of the insulating member 4 surrounds the outer side of the first tab 32, and the second insulating part 42 is located between the wall part 11 and the first tab 32, the insulating member 4 can insulate and isolate the first tab 32 from the housing 1, thereby reducing the insulation treatment processes such as applying an insulating adhesive to the first tab 32, and thus helping to improve the production efficiency of the battery cell 20.

Finally, it should be noted that the above embodiments are only used to illustrate the technical solutions of the present application, rather than limit the same. Although the present application has been described in detail with reference to the foregoing embodiments, those of ordinary skill in the art should understand that modifications can still be made to the technical solutions recorded in the foregoing embodiments, or equivalent substitutions to some or all of the technical features can be made. However, such modifications or substitutions do not make the spirit of the corresponding technical solutions deviate from the scope of the technical solutions in the embodiments of the present application, and shall all fall within the scope of the claims and specification of the present application. In particular, the technical features mentioned in the embodiments can be combined in any manner, provided that there is no structural conflict. The present application is not limited to the specific embodiments disclosed herein, but encompasses all technical solutions falling within the scope of the claims.

## Claims

1. A battery cell, comprising:
a housing, comprising a wall part;
an electrode terminal, disposed on the wall part;
an electrode assembly, accommodated in the housing, wherein the electrode assembly comprises a first tab, and the first tab is electrically connected to the electrode terminal; and
an insulating member, comprising a first insulating part and a second insulating part, wherein the first insulating part surrounds an outer side of the first tab, and the second insulating part is connected to the first insulating part and is located between the wall part and the first tab.

2. The battery cell according to claim 1, wherein a notch is provided on an end surface, facing away from the second insulating part, of the first insulating part, and the notch extends through the first insulating part in a thickness direction of the first insulating part.

3. The battery cell according to claim 2, wherein the first insulating part is provided with a plurality of notches, and the plurality of notches are arranged along a circumferential direction of the first insulating part.

4. The battery cell according to claim 2 or 3, wherein in a direction from the first insulating part toward the electrode assembly, a width of the notch in a circumferential direction of the first tab gradually increases.

5. The battery cell according to any one of claims 2 to 4, wherein the battery cell further comprises a current collecting member connected to the first tab, the first insulating part defines, in an enclosing manner, an accommodating inner cavity, the current collecting member is located in the accommodating inner cavity, and at least a portion of the current collecting member is located between the second insulating part and the first tab;
a through hole in communication with the accommodating inner cavity is formed in the second insulating part, and the current collecting member is connected to the electrode terminal through the through hole.

6. The battery cell according to claim 5, wherein in a thickness direction of the wall part, a dimension of the first insulating part is H1, a thickness of the current collecting member is H3, a dimension of the notch is H4, and H4 ≤ H1 - H3.

7. The battery cell according to any one of claims 5 to 6, wherein the electrode assembly further comprises an electrode plate and a separator disposed in a stacked manner, and the first tab is connected to the electrode plate and extends beyond the separator; in the thickness direction of the wall part, the dimension of the first insulating part is H1, a distance by which the first tab extends beyond the separator is H2, the thickness of the current collecting member is H3, and H1 ≥ H2 + H3.

8. The battery cell according to claim 7, wherein the first tab is of a cylindrical body, a length of the first tab in a winding direction is L1, a length of the electrode plate in a winding direction is L2, and L1/L2 ≥ 50%.

9. The battery cell according to any one of claims 1 to 8, wherein the battery cell further comprises a current collecting member connected to the first tab, the first insulating part defines, in an enclosing manner, an accommodating inner cavity, the current collecting member is located in the accommodating inner cavity, and at least a portion of the current collecting member is located between the second insulating part and the first tab;
a through hole in communication with the accommodating inner cavity is formed in the second insulating part, and the current collecting member is connected to the electrode terminal through the through hole;
the battery cell further comprises an insulating structure, the insulating structure is disposed on a surface, facing the electrode assembly, of the wall part, and at least a portion of the insulating structure is located between the wall part and the second insulating part.

10. The battery cell according to claim 9, wherein in a direction from the first insulating part toward the first tab, at least a portion of the insulating structure extends beyond an inner wall surface of the through hole to insulate the current collecting member from the wall part.

11. The battery cell according to claim 10, wherein the at least a portion of the insulating structure extending beyond the inner wall surface of the through hole abuts against the current collecting member to press the first tab.

12. The battery cell according to any one of claims 9 to 11, wherein the at least a portion of the insulating structure is clamped between the wall part and the second insulating part.

13. The battery cell according to any one of claims 9 to 12, wherein in the thickness direction of the wall part, an overlapping region between a projection of the insulating structure and a projection of the second insulating part is annular, a width of the overlapping region in a radial direction of the first tab is D, and D ≥ 0.8 mm.

14. The battery cell according to any one of claims 1 to 13, wherein in the thickness direction of the wall part, a wall thickness of the second insulating part is T1, and 0.05 mm ≤ T1 ≤ 4 mm.

15. The battery cell according to any one of claims 1 to 14, wherein the first insulating part defines, in an enclosing manner, an accommodating inner cavity, and at least a portion of the first tab is accommodated in the accommodating inner cavity;
in a direction from the first tab toward the first insulating part, a dimension of at least a portion of the accommodating inner cavity in the radial direction of the first tab decreases.

16. The battery cell according to any one of claims 1 to 15, wherein a thickness of an end part region, away from the second insulating part, of the first insulating part is less than a thickness of an end part region, close to the second insulating part, of the first insulating part.

17. The battery cell according to claim 16, wherein in the direction from the first tab toward the first insulating part, a thickness of at least a portion of the first insulating part gradually increases.

18. The battery cell according to any one of claims 1 to 17, wherein the electrode assembly further comprises a second tab having a polarity opposite to that of the first tab, and the second tab is electrically connected to the housing.

19. The battery cell according to any one of claims 1 to 18, wherein the housing comprises a housing body and an end cover, and the housing body comprises an end wall and a side wall; the side wall is disposed around an outer periphery of the end wall, one end of the side wall is connected to the end wall, and the other end of the side wall forms an opening opposite to the end wall; the end cover covers the opening, and the wall part is the end wall or the end cover.

20. A battery, comprising the battery cell according to any one of claims 1 to 19.

21. An electric device, comprising the battery according to claim 20, wherein the battery is configured to provide electrical energy.
